# EUROPÄISCHE PATENTSCHRIFT

(11) **EP 1 155 609 B1**
(45) Veröffentlichungstag und Bekanntmachung des Hinweises auf die Patenterteilung: **17.11.2004**
(21) Anmeldenummer: 01110547.5
(22) Anmeldetag: 28.04.2001
(51) Int. Cl.: A01D 57/20

(54) **Schwadeinrichtung**
Swathing device
Dispositif d'andainage

(30) Priorität: 16.05.2000 DE 10024040
(43) Veröffentlichungstag der Anmeldung: 21.11.2001
(73) Patentinhaber: DEERE & COMPANY, Moline, Illinois 61265-8098 (US)
(72) Erfinder: Franet, Roger, 57200 Sarreguemines (FR); Faivre, Damien, 70100 Apremont (FR); Demesmay, David, 25000 Besancon (FR)
(74) Vertreter: Magin, Ludwig Bernhard

(56) Entgegenhaltungen:
- EP-A- 0 406 766
- DE-A- 3 532 114
- DE-A- 19 804 250
- DE-C- 3 724 952
- US-A- 4 757 672

## Beschreibung

Die Erfindung betrifft ein Mähgerät mit einer Schwadeinrichtung, die eine Fördervorrichtung und einen vertikal beweglichen Rahmen zur Verbindung der Fördervorrichtung mit dem Mähgerät aufweist.

Die GB-A-20 88 684 offenbart ein gezogenes Mähgerät mit einer Schwadeinrichtung in deren abgabeseitigen Bereich. Die Schwadeinrichtung enthält eine Schnecke in einem Fördergehäuse, die geschnittenes Gut annimmt und seitlich des Mähgeräts abgibt. Die Schwadeinrichtung wird von einem Rahmen an dem Mähgerät getragen und kann in eine hochgeschwenkte Außerbetriebs- und eine abgesenkte Betriebsstellung geschwenkt werden. Wenn das Fördergehäuse aus der Betriebsin die Außerbetriebsstellung geschwenkt wird, folgt es einem Kreisbogen und bewegt sich nach hinten von dem Mähgerät weg.

Das der Erfindung zugrunde liegende Problem wird darin gesehen, dass sich bei der bekannten Schwadeinrichtung die Baulänge des Mähgeräts vergrößert, wenn die Schwadeinrichtung ihre Außerbetriebsstellung einnimmt. Dies ist insbesondere dann nachteilig, wenn das Mähgerät längs auf der Straße transportiert werden soll, wodurch sich die Breite erhöht.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise bewirkt eine rückwärtig gerichtete Bewegung des Rahmens nicht in gleicher Weise eine ausladende Bewegung der Fördereinrichtung; vielmehr bleibt die Fördereinrichtung entweder innerhalb der bisherigen Grenzen oder bewegt sich sogar hinter diese zurück. Jedenfalls wird eine Gesamtlänge der Schwadeinrichtung auf dem Mähgerät erreicht, die bei dem Transport des Mähgeräts in seiner Längsrichtung eine Breite innerhalb der zulässigen Maße ergibt. Der Rahmen kann zusammengeklappt bzw. -gefaltet werden oder die Fördervorrichtung kann gegenüber dem Rahmen z. B. aufgrund der Schwerkraft pendeln.

Es ist zwar aus der US-A-4 757 672 bekannt, eine Schwadeinrichtung an einem Rahmen in einem Gelenk zu befestigen. Allerdings konnte die Schwadeinrichtung in dem Gelenk nicht frei schwenken, sondern konnte lediglich in ihrer Neigung für den Betrieb eingestellt werden. Beim Anheben in die Transport- oder Außerbetriebsstellung beschreibt die Schwadeinrichtung denselben Weg wie in der GB-A-20 88 684.

Wenn die Fördervorrichtung ein Förderband enthält, ergibt sich gegenüber dem bekannten Schneckenförderer eine weitere Reduzierung der Baulänge, weil ein Förderband in einer senkrechten Stellung eine sehr geringe Erstreckung aufweist.

Eine Dimensionierung des Rahmens dergestalt, daß sich ein mit der Fördervorrichtung verbundener Schenkel in einer Außerbetriebs- oder Transportstellung im wesentlichen innerhalb der Grundfläche des Mähgeräts erstreckt, hat zur Folge, daß die Schwadeinrichtung allenfalls noch um die Breite ihrer Fördervorrichtung über das Mähgerät überstehen kann.

Die Verwendung einer Wand vor dem Gelenk hält Schmutz und Gärsäfte von dem Gelenk fern und vermeidet dadurch Korrosion und ein Festsetzen des Gelenks.

Die schwenkbare Anbringung des Rahmens an dem Mähgerät ist eine technisch einfache Art, die Fördervorrichtung zu verlagern, wozu bereits ein einfachwirkender Hydraulikmotor ausreicht.

Ein robustes und einfach herzustellendes Gelenk weist ein Rohr und eine auf diesem schwenkbar gelagerte Hülse auf, wobei die Bewegung mittels eines Bewegungsteils, z. B. eines Zapfens, und wenigstens einem Anschlag begrenzt wird.

Nach einer anderen Variante dreht sich ein Rohr in einem Lager. Ein Zapfen, Bolzen oder dergleichen ist in oder auf dem Rohr befestigt und durchsetzt einen Schlitz oder ein Langloch in dem Lager und kommt dort zur Anlage, wodurch die Endstellungen der Fördervorrichtung festgelegt werden.

In der Zeichnung ist ein nachfolgend näher beschriebenes Ausführungsbeispiel der Erfindung dargestellt. Es zeigt:
- Fig. 1: ein Mähgerät mit einer Schwadeinrichtung in einem Betriebszustand in Seitenansicht,
- Fig. 2: einen Ausschnitt der Schwadeinrichtung in vergrößerter Darstellung und
- Fig. 3: das Mähgerät und die Schwadeinrichtung nach Figur 1 in einem Außerbetriebszustand.

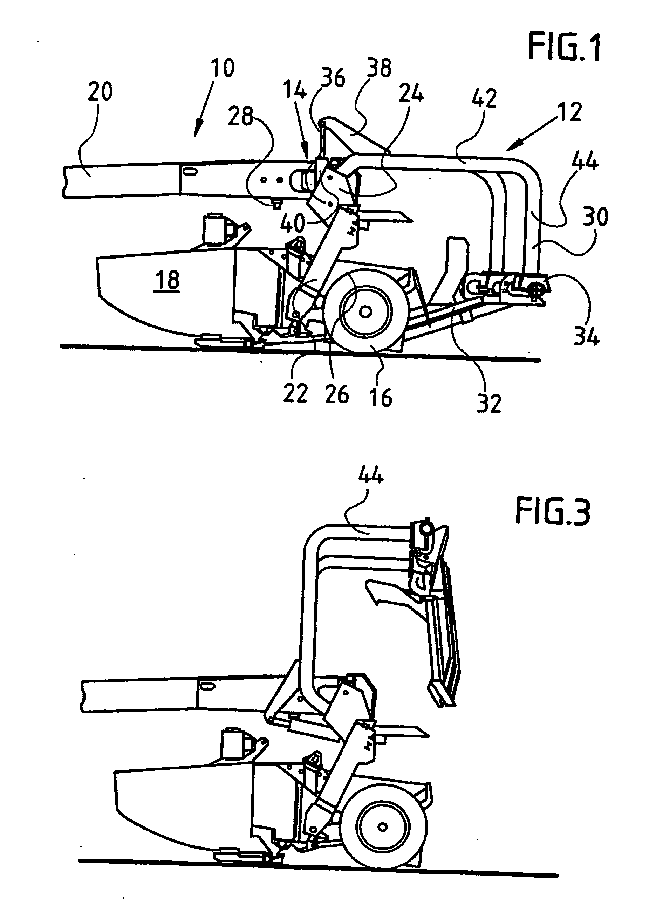

In Figur 1 ist ein Mähgerät 10 mit einer Schwadeinrichtung 12 gezeigt, die sich in einem Betriebszustand befindet.

Das Mähgerät 10 enthält ein Fahrgestell 14, Räder 16, ein Mähwerk 18 und eine Deichsel 20.

Das Mähgerät 10 ist in diesem Ausführungsbeispiel als ein Mähknickzetter ausgebildet, der hinter einem Zugfahrzeug, z. B. einem Ackerschlepper hergezogen werden kann. Das Mähgerät 10 weist auch eine Breite auf, die es nicht zuläßt, es auf der Straße in der in Figur 1 gezeigten Ausrichtung zu fahren. Selbstverständlich ist die Erfindung auch bei Mähgeräten 10 anwendbar, die schmaler als die zulässige Transportbreite sind.

Das Fahrgestell 14 ist in der Fahrtrichtung in bekannter Weise in der Form eines auf dem Kopf stehenden "U" ausgebildet, dessen Schenkel 22 an ihrem unteren Endbereich die Räder 16 drehbar aufnehmen und an ihrem oberen Ende von einem Querbalken 24 miteinander verbunden werden.

Die Räder 16 stützen das Mähgerät 10 auf dem Boden ab und nehmen in dem Freiraum zwischen sich einen Auslaß 26 des Mähwerks 18 auf.

Das Mähwerk 18 trennt auf dem Boden stehendes Erntegut ab und gibt es durch den Auslaß 26 zu der Schwadeinrichtung 12.

Die Deichsel 20 dient der Verbindung des Fahrgestells 14 mit dem Zugfahrzeug und kann in einem Gelenk 28 quer zur Betrachterebene an dem Querbalken 24 geschwenkt werden, um sich schließlich in dessen Haupterstreckungsrichtung zu erstrecken.

Die Schwadeinrichtung 12 enthält einen Rahmen 30, eine Fördervorrichtung 32 und mehrere Gelenke 34, die als Einheit um ein Lager 36 an dem Querbalken 24 vertikal schwenkbar sind.

Die Schwadeinrichtung 12 ist vorgesehen, um von dem Mähwerk 18 abgegebenes Mähgut neben das Mähwerk 18 zu fördern, damit es mit einem nicht seitwärts geförderten Schwad bei dem nächsten Mähgang ein Doppelschwad bildet. Folglich ist die Schwadeinrichtung 12 so ausgebildet, daß sie einen Förderzustand - Betriebsstellung, lt. Figur 1 - und einen Nicht-Förderzustand - Außerbetriebsstellung, lt. Figur 3 - einnehmen kann. Hierzu erstreckt sich zwischen einem Ausleger 38 des Rahmens 30 und dem Querbalken 24 ein Hydraulikmotor 40.

Der Rahmen 30 weist an beiden Seiten einen ersten Schenkel 42 und einen zweiten Schenkel 44 auf, die im wesentlichen rechtwinklig zueinander verlaufen und starr miteinander verbunden bzw. einstückig ausgebildet sind. Der erste Schenkel 42 ist in dem Lager 36 vertikal schwenkbar an den Querbalken 24 angeschlossen und erstreckt sich in der Situation gemäß Figur 1 im wesentlichen waagrecht, wobei sein in Figur 1 links gelegener Endbereich auf eine kurze Länge umgebogen ist.

Der zweite Schenkel 44 verläuft in Figur 1 senkrecht und trägt an seinem unteren Ende ein Gelenk 34.

Die Fördervorrichtung 32 enthält ein Förderband 46 mit einer planaren Förderfläche, das auf mehreren Trägern 48 gehalten und auf nicht näher beschriebene aber bekannte Weise angetrieben wird. Das Förderband 46 weist eine geringe nach vorne gerichtete Neigung zum Boden auf. Neben der rückwärtigen Seite des Förderbands 46 ist eine Wand 50 vorgesehen, die verhindert, daß auf das Förderband 46 geworfenes Mähgut hinten herabfällt und die Gelenke 34 beschädigt. Die Träger 48 sind mit einem Rohr 54 verschweißt oder verschraubt und erstrecken sich von diesem im wesentlichen tangential fort. Im Bereich der Gelenke 34 erstreckt sich radial von dem Rohr 54 ein Bewegungsteil 56. Der Bewegungsteil 56 kann als Bolzen, Zapfen, Schraube, Nocken oder dergleichen ausgebildet sein und ist starr und stabil - nicht notwendigerweise unlösbar - mit dem Rohr 54 verbunden.

Die Gelenke 34 befinden sich an Flanschen 52 an den unteren Enden der Schenkel 44. Jedes Gelenk 34 setzt sich aus einer oberen und einer unteren Halbschale 58 und 60 zusammen, die mittels nicht gezeigter Schrauben miteinander verbindbar sind und in einem von ihnen umschlossenen Innenraum ein Lager 66 bilden, das das Rohr 54 aufnimmt. Die obere Halbschale 58 ist an den Flansch 52 angeschraubt und nach unten konkav. Die untere Halbschale 60 ist in der Art eines Bügels ausgebildet und weist eine Aussparung 62 in der Art eines Langlochs auf, durch die sich der Bewegungsteil 56 erstreckt und deren Enden jeweils einen Anschlag 64 bilden, die den Bewegungsfreiraum des Bewegungsteils 56 beschränken.

Nach alledem ergibt sich ausgehend von dem in Figur 1 dargestellten Zustand folgende Funktion.

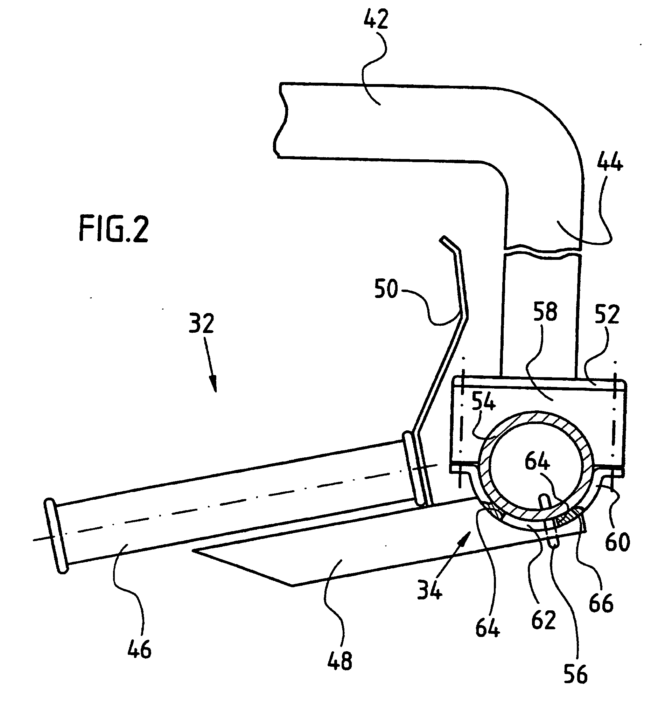

Bei der in Figur 1 gezeigten Betriebsstellung der Schwadeinrichtung 12 wird die Fördervorrichtung 32 aufgrund ihres Eigengewichts entgegen dem Uhrzeigerdrehsinn in dem Lager 66 um die Drehachse des Rohrs 54 in den Gelenken 34 bewegt. In dieser Stellung legt sich der Bewegungsteil 56 an die Wand an dem rechten Ende der Aussparung 62, dem Anschlag 64, an, wie dies in Figur 2 gezeigt ist. Wird die Fördervorrichtung 32 und der Rahmen 30 in die Außerbetriebsstellung gemäß Figur 3 geschwenkt, wird die Fördervorrichtung 32 ihre relative Lage gegenüber dem Rahmen 30 beibehalten, bis sie aufgrund der Schwerkraft im Uhrzeigerdrehsinn schwenkt, wobei sich der Bewegungsteil 56 in der Aussparung 62 bewegt. Diese Bewegung kann solange fortgeführt werden, bis der Bewegungsteil 56 an dem Anschlag 64 an dem linken Ende der Aussparung 62 anliegt. Die Fördervorrichtung 32, insbesondere das Förderband 46, ist stets bestrebt, eine vertikale Lage unter den Gelenken 34 einzunehmen und steht folglich rückwärtig nicht über den Rahmen 30 über. In der in Figur 3 gezeigten Stellung erstreckt sich der zweite Schenkel 44 waagrecht und oberhalb des Auslasses 26 und somit innerhalb der Grundfläche des Mähgeräts 10.

## Patentansprüche

1. Mähgerät (10) mit einer Schwadeinrichtung (12), die eine Fördervorrichtung (32) und einen vertikal beweglichen Rahmen (30) zur Verbindung der Fördervorrichtung (32) mit dem Mähgerät (10) aufweist, **dadurch gekennzeichnet, dass** mittels wenigstens eines Gelenks (34) die Fördervorrichtung (32) gegenüber dem Rahmen (30) oder ein Schenkel (44) des Rahmens (30) gegenüber einem anderen Schenkel (42) aus einer dem Mähgerät (10) abgelegenen in eine diesem zugelegene Stellung derart schwenkbar ist, dass sich die Schwadeinrichtung (12) im wesentlichen innerhalb der Grundfläche des Mähgeräts (10) erstreckt.

2. Mähgerät nach Anspruch 1, **dadurch gekennzeichnet, dass** die Fördervorrichtung (32) ein Förderband (46) enthält.

3. Mähgerät nach Anspruch 1 oder 2, **dadurch gekennzeichnet, dass** sich ein mit der Fördervorrichtung (32) verbundener Schenkel (44) in einer Außerbetriebsstellung im wesentlichen innerhalb der Grundfläche des Mähgeräts (10) erstreckt.

4. Mähgerät nach einem oder mehreren der vorherigen Ansprüche, **gekennzeichnet durch** ein Dämpfungsglied zum Dämpfen der Stöße in dem Rahmen (30) oder zwischen dem Rahmen (30) und der Fördervorrichtung (32).

5. Mähgerät nach einem oder mehreren der vorherigen Ansprüche, **gekennzeichnet durch** eine Wand (50) zwischen der Fördervorrichtung (32) und dem Bereich der Verbindung zwischen dem Rahmen (30) und der Fördervorrichtung (32).

6. Mähgerät nach einem oder mehreren der vorherigen Ansprüche, **dadurch gekennzeichnet, dass** der Rahmen (30) an dem Mähgerät (10) schwenkbar angebracht ist.

7. Mähgerät nach einem oder mehreren der vorherigen Ansprüche, **dadurch gekennzeichnet, dass** das Gelenk (34) ein Rohr (54) und eine auf diesem schwenkbar gelagerte Hülse sowie einen Bewegungsteil (56) und wenigstens einen Anschlag (64) aufweist.

8. Mähgerät nach einem oder mehreren der vorherigen Ansprüche 1 bis 6, **dadurch gekennzeichnet, dass** das Gelenk (34) ein Rohr (54) und ein dieses aufnehmendes Lager (66) enthält, wobei der Bewegungsteil (56) mit dem Rohr (54) verbunden ist und in und in einer Aussparung (62) in dem Lager (66) geführt ist.

## Claims

1. A mower (10) with a swathing device (12) which comprises a conveyor device (32) and a vertically movable frame (30) for connecting the conveyor device (32) to the mower (10), **characterized in that** the conveyor device (32) can so pivot by means of at least one joint (34) relative to the frame (30) or one arm (44) of the frame (30) can so pivot relative to another arm (42) out of a position remote from the mower (10) into a position close thereto, so that the swathing device (12) extends substantially within the ground plan of the mower (10).

2. A mower according to claim 1, **characterized in that** the conveyor device (32) includes a conveyor belt (46).

3. A mower according to claim 1 or 2, **characterized in that** an arm (44) connected to the conveyor device (32) extends substantially within the ground plan of the mower (10) in an out of operation position.

4. A mower according to one or more of the preceding claims, **characterized by** a damping element for damping the shocks in the frame (30) or between the frame (30) and the conveyor device (32).

5. A mower according to one or more of the preceding claims, **characterized by** a wall (50) between the conveyor device (32) and the region of the connection between the frame (30) and the conveyor device (32).

6. A mower according to one or more of the preceding claims, **characterized in that** the frame (30) is fitted pivotally on the mower (10).

7. A mower according to one or more of the preceding claims, **characterized in that** the joint (34) comprises a tube (54) and a sleeve mounted to turn thereon, as well as a moving part (56) and at least one stop (64).

8. A mower according to one or more of the preceding claims 1 to 6, **characterized in that** the joint (34) comprises a tube (54) and a bearing (66) receiving this, wherein the moving part (56) is connected to the tube (54) and is guided in a recess (62) in the bearing (66).

## Revendications

1. Faucheuse (10) comprenant un dispositif d'andainage (12) qui lui-même présente un dispositif de convoyage (32) et un cadre mobile verticalement (30) pour le raccordement du dispositif de convoyage (32) à la faucheuse (10), **caractérisée en ce que** le dispositif de convoyage (32) peut, au moyen d'au moins une articulation (34), pivoter par rapport au cadre (30) ou qu'un montant (44) du cadre (30) peut pivoter par rapport à un autre montant (42), d'une position éloignée de la faucheuse (10) à une position rapprochée de la faucheuse et de telle sorte que le dispositif d'andainage (12) se déploie pour l'essentiel sans sortir de la surface de base de la faucheuse (10).

2. Faucheuse conforme à la revendication 1, **caractérisée en ce que** le dispositif de convoyage (32) comprend une bande de convoyage (46).

3. Faucheuse conforme à la revendication 1 ou 2, **caractérisée en ce qu'**un montant (44) raccordé au dispositif de convoyage (32) se déploie en position hors service pour l'essentiel sans sortir de la surface de base de la faucheuse (10).

4. Faucheuse conforme à une ou plusieurs des revendications précédentes, **caractérisée par** un amortisseur pour l'amortissement des chocs au niveau du cadre (30) ou entre le cadre (30) et le dispositif de convoyage (32).

5. Faucheuse conforme à une ou plusieurs des revendications précédentes, **caractérisée par** une paroi (50) entre le dispositif de convoyage (32) et la zone de raccordement entre le cadre (30) et le dispositif de convoyage (32).

6. Faucheuse conforme à une ou plusieurs des revendications précédentes, **caractérisée en ce que** le cadre (30) est monté sur la faucheuse (10) de manière à pouvoir pivoter.

7. Faucheuse conforme à une ou plusieurs des revendications précédentes, **caractérisée en ce que** l'articulation (34) comprend un tube (54) et une douille montée sur le tube (54), ainsi qu'une pièce mobile (56) et au moins un arrêt (64).

8. Faucheuse conforme à une ou plusieurs des revendications précédentes 1 à 6, **caractérisée en ce que** l'articulation (34) comprend un tube (54) et un logement (66) contenant ce dernier, la pièce mobile (56) étant reliée au tube (54) et guidée dans un évidement (62) du logement (66).
